# EUROPEAN PATENT APPLICATION

(11) **EP 4 613 233 A1**
(43) Date of publication of application: **10.09.2025**
(21) Application number: 25159802.5
(22) Date of filing: 25.02.2025
(51) Int. Cl.: A61C 1/05, A61C 1/06, A61C 1/12

(54) **DENTAL HANDPIECE**

(30) Priority: 06.03.2024 JP 2024033513
(71) Applicant: J. MORITA MFG. CORP., Fushimi-ku Kyoto-shi Kyoto 612-8533 (JP)
(72) Inventor: TANAKA, Hitoshi, Kyoto-shi, Kyoto, 612-8533 (JP)
(74) Representative: Müller Hoffmann & Partner

(57) **Abstract**

A dental handpiece that cuts and treats a tooth includes: a head including a holder configured to hold a cutting tool configured to cut the tooth, a tool rotation mechanism configured to rotate the cutting tool, a housing including the holder and the tool rotation mechanism, and a cooling passage formed in a side wall of the housing; and a grip including a first air supply passage configured to supply first air for cooling the tool rotation mechanism, and a second air supply passage connected to the cooling passage and configured to supply the head with second air lower in flow rate than the first air. The head is joined to the grip such that, of an angle formed between a rotation axis of the cutting tool and a major axis of a coupling portion of the grip which is coupled to the head, an angle on a cutting edge side of the cutting tool is an obtuse angle.

## Description

### RELATED APPLICATIONS

This application is based on Japanese Patent Application No. 2024-033513 filed on March 6, 2024 with the Japan Patent Office.

### BACKGROUND OF THE DISCLOSURE

### Field of the Disclosure

The present disclosure relates to a dental handpiece.

### Description of the Background Art

In the field of dental healthcare, a handpiece that cuts teeth by rotating at high speed with a cutting tool held in a chuck provided inside the head is known as a cutting instrument.

In cutting of teeth using a dental handpiece, when the chuck is rotatably driven, the entire head may have high temperature along with a rise in rotation speed. The head of the dental handpiece is a portion that the practitioner's hand touches in replacement of the cutting tool, or the portion that may come into contact with the patient during treatment, and accordingly, it is not preferable for the head to have high temperature.

Regarding cooling of a head, for example, Japanese Patent Laying-Open No. 2021-16621 discloses a technique for a dental handpiece that releases heat generated inside a head to the outside through a vent that causes the internal and external spaces near a bearing to communicate with each other.

### SUMMARY OF THE DISCLOSURE

As disclosed in Japanese Patent Laying-Open No. 2021-16621, the dental handpiece includes a mechanism for cooling the head. However, when the dental handpiece is used continuously for a long period of time, a large amount of heat is generated, and accordingly, the head may be cooled insufficiently. Thus, in addition to the existing cooling means of the head, cooling means for further suppressing a temperature rise of the head is desired.

The present disclosure has been made in view of the above problem. An object of the present disclosure is to provide a dental handpiece that can suppress a temperature rise of a head.

A dental handpiece of the present disclosure is a dental handpiece that cuts and treats a tooth. The dental handpiece includes: a head including a holder configured to hold a cutting tool configured to cut the tooth, a tool rotation mechanism configured to rotate the cutting tool, a housing including the holder and the tool rotation mechanism, and a cooling passage formed in a side wall of the housing; and a grip including a first air supply passage configured to supply first air for cooling the tool rotation mechanism, and a second air supply passage connected to the cooling passage and configured to supply the head with second air lower in flow rate than the first air. The head is joined to the grip such that, of an angle formed between a rotation axis of the cutting tool and a major axis of a coupling portion of the grip, an angle on a cutting edge side of the cutting tool is an obtuse angle, the coupling portion being coupled to the head.

The foregoing and other objects, features, aspects, and advantages of the present disclosure will become apparent from the following detailed description of the present disclosure when taken in conjunction with the accompanying drawings.

### BRIEF DESCRIPTION OF THE DRAWINGS

Fig. 1 is an external view showing an appearance of a dental handpiece.
Fig. 2 is a sectional view taken along an arrow A-A in Fig. 1.
Fig. 3 illustrates a structure inside of a head.
Fig. 4 illustrates the structure inside of the head and a flow of compressed air inside the head.
Fig. 5 is a diagram for illustrating a flow rate of air supplied to the handpiece and a flow rate of air leaking from the head.
Fig. 6 is a diagram for illustrating flow rates of air leaking from the front and the rear of the head in the handpiece.
Fig. 7 is a diagram for illustrating changes in flow rate of air in the handpiece due to a cooling passage provided.
Fig. 8 is a diagram for illustrating changes in temperature of the handpiece.

### DETAILED DESCRIPTION

The present disclosure will be described below with reference to the drawings.

### [Configuration of Dental Handpiece]

Dental handpieces that rotate a cutting tool for cutting teeth at high speed while holding the cutting tool include a micro motor handpiece that rotates a cutting tool using a micro motor, and an air turbine handpiece that rotates a cutting tool using an air turbine. The dental handpiece according to the present disclosure may be the handpiece that rotates a cutting tool using a micro motor, or the handpiece that rotates a cutting tool using an air turbine. In the description, the micro motor handpiece that rotates a cutting tool using a micro motor is used.

In addition, the grips of dental handpieces come in various shapes depending on the purpose of treatment. For example, the shape of the grip used for general treatment is straight, but for procedures on impacted wisdom teeth or molar teeth, a handpiece that is angled relative to the major axis of the grip is provided such that treatment can be performed without interference from the front teeth or the row of teeth. In particular, a 45-degree contra angle handpiece is used for treatment on impacted wisdom teeth.

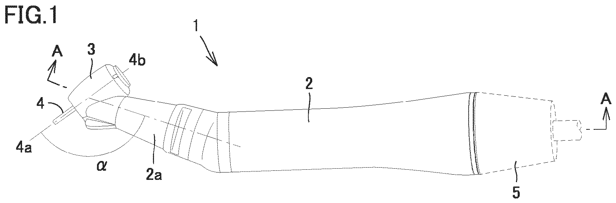

Here, the description will be made using the 45-degree contra angle handpiece. As described above, in the 45-degree contra angle handpiece, of the angle formed between the rotation axis of the cutting tool and the major axis of the coupling portion of the grip which is coupled to the head, the angle opposite to the direction in which a cutting edge of the cutting tool is located is approximately 45° in order to facilitate the practitioner's access to the molar area or impacted wisdom teeth with the cutting tool. In this specification, for example, when the grip is bent in the direction of extension as shown in Fig. 1, the angle formed between the rotation axis of the cutting tool and the major axis of the coupling portion of the grip which is coupled to the head refers to an angle α. When the grip is not bent in the direction of extension, the major axis of the coupling portion of the grip which is coupled to the head refers to the major axis of the grip, and the angle formed between the rotation axis of the cutting tool of the grip and the major axis of the coupling portion of the grip which is coupled to the head is equal to the angle formed between the rotation axis of the cutting tool and the major axis of the grip.

In the treatment on impacted wisdom teeth, the vicinity of the detached area of the gum may be cut, leading to higher risk of causing emphysema than in other treatments. Emphysema is caused by air being blown onto the separation area of the gum. Thus, unlike other dental handpieces, which spray a mixture of water and chip air onto an affected area during treatment, the 45-degree contra angle handpiece injects only water into the affected area without mixing air with chip air, in consideration of the risk of causing emphysema. Thus, in the 45-degree contra angle handpiece, the passage for supplying chip air to be mixed with water for water injection is closed in any other dental handpiece, and chip air may not be used.

Since the head is the portion that the practitioner's hand touches in replacement of the cutting tool, or the portion that may come into contact with the patient during treatment, compressed air is supplied to the head to prevent a temperature rise of the head. However, if the dental handpiece is used continuously for a long period of time, the heat generated from the tool rotation mechanism will increase, and cooling may be performed insufficiently. Therefore, in a dental handpiece 1, a head 3 is cooled by effectively using second air that is not used as chip air.

In the following a dental handpiece will be described that can suppress an amount of air that leaks from the cutting edge side of the cutting tool of the head while cooling the head effectively using unused air, such as chip air in the 45-degree contra angle handpiece, thereby suppressing a temperature rise of the head. Specifically, a configuration of the dental handpiece will be described below with reference Figs. 1 to 4.

Fig. 1 is an external view of dental handpiece 1. As shown in Fig. 1, dental handpiece 1 includes a grip 2 and head 3. In the dental handpiece shown in Fig. 1, grip 2 and head 3 are joined such that, of the angle formed between the rotation axis of cutting tool 4 held by head 3 and the major axis of a coupling portion 2a of grip 2 which is coupled to head 3, angle α on a cutting edge side 4a, which is the direction in which the cutting edge of a cutting tool 4 is located, is approximately 135° . Thus, the angle opposite to the direction in which the cutting edge of cutting tool 4 is located is approximately 45°. Dental handpiece 1 is configured to transmit the rotation input from a drive unit 5 connected to one end (right side in Fig. 1) of dental handpiece 1 in the longitudinal direction to cutting tool 4 held at the other end (left side in Fig. 1) in the longitudinal direction while increasing the speed to rotate cutting tool 4 at high speed.

Grip 2 is a portion held by the user, such as the practitioner who cuts and treats teeth or the worker who performs maintenance. Further, grip 2 is configured to transmit the rotation and the driving force of a motor built in drive unit 5 to head 3. Grip 2 is bent in the direction of extension and is joined to head 3 at coupling portion 2a. The internal configuration of grip 2 will be described later.

As shown in Fig. 1, head 3 is formed in an approximately cylindrical shape with its longitudinal direction being a direction that is approximately orthogonal to the longitudinal direction of grip 2 in side view. Head 3 has the function of holding one end of cutting tool 4 that cuts teeth and the function of transmitting the rotation and the driving force from grip 2 to cutting tool 4. The internal configuration of head 3 will be described later.

Cutting tool 4, which is shaped into a needle having a length of approximately several tens of millimeters, rotates at high speed to cut teeth. In the following description, the side of head 3 to which the blade of cutting tool 4 is attached will be referred to as cutting edge side 4a, and the direction opposite to cutting edge side 4a of the cutting tool on the rotation axis of the cutting tool will be referred to as an opposite side 4b.

Drive unit 5 has a built-in motor. As dental handpiece 1 is connected to drive unit 5, the rotational driving force of the motor is transmitted to cutting tool 4, causing cutting tool 4 to rotate.

The rotation speed of the motor built in drive unit 5 is adjustable by the practitioner in the range of 100 to 40,000 rpm. The driving force of the motor is transmitted to head 3 by the above-mentioned configuration, for example, and the gear ratio in the transmission is from 1/20 speed reduction to over 1:7 speed increase, and the rotation speed of cutting tool 4 is adjustable by the practitioner in the range of 5 to 300,000 rpm.

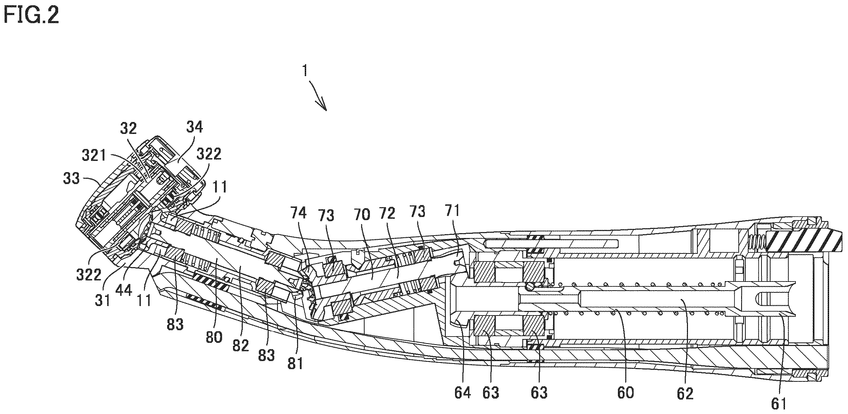

Fig. 2 is a sectional view taken along an arrow A-A in Fig. 1. The inside of each of grip 2 and head 3 will be described with reference to Fig. 2. Referring to Fig. 2, grip 2 includes a first transmission mechanism 60, a second transmission mechanism 70, a third transmission mechanism 80, and a first air supply passage 11.

Dental handpiece 1 is configured to increase the speed of rotation of the motor of drive unit 5 by first transmission mechanism 60, second transmission mechanism 70, and third transmission mechanism 80 to rotate cutting tool 4 at high speed. In the longitudinal direction of dental handpiece 1, first transmission mechanism 60, second transmission mechanism 70, and third transmission mechanism 80 are arranged in this order, from the base end side on which drive unit 5 is connected to the tip end side on which head 3 is joined. First transmission mechanism 60, second transmission mechanism 70, and third transmission mechanism 80 are arranged inside the housing of grip 2.

First transmission mechanism 60 is configured to transmit the rotation of the motor of drive unit 5 to second transmission mechanism 70. First transmission mechanism 60 includes a motor coupling portion 61, a first rotation shaft 62, two first bearing portions 63, and a drive gear 64. Motor coupling portion 61 is configured to be connectable to the shaft portion of the motor of drive unit 5. Motor coupling portion 61 is connected to the base end side of first rotation shaft 62. First rotation shaft 62 is a hollow and approximately cylindrical body. First rotation shaft 62 is held by two first bearing portions 63 so as to be rotatable about the rotation axis extending axially. Two first bearing portions 63 are spaced apart from each other axially of first rotation shaft 62. Each of the two first bearing portions 63 is a ball bearing. Drive gear 64 is connected to the tip end side of first rotation shaft 62. Drive gear 64 is an internal gear.

Second transmission mechanism 70 is configured to transmit the rotation of first transmission mechanism 60 to third transmission mechanism 80. Second transmission mechanism 70 includes a pinion gear 71, a second rotation shaft 72, two second bearing portions 73, and a bevel gear 74. Pinion gear 71 is configured to mesh with drive gear 64. Pinion gear 71 is connected to the base end side of second rotation shaft 72. Second rotation shaft 72 is a solid and approximately cylindrical body. Second rotation shaft 72 is held by two second bearing portions 73 so as to be rotatable about a rotation axis extending axially. Two second bearing portions 73 are spaced apart from each other axially of second rotation shaft 72. Each of the two second bearing portions 73 is a ball bearing. Bevel gear 74 is connected to the tip end side of second rotation shaft 72. Bevel gear 74 is an internal gear.

Third transmission mechanism 80 is configured to transmit the rotation of second transmission mechanism 70 to head 3. Third transmission mechanism 80 includes an intermediate gear 81, a third rotation shaft 82, two third bearing portions 83, and a front gear 84. Intermediate gear 81 is configured to mesh with bevel gear 74. Intermediate gear 81 is connected to the base end side of third rotation shaft 82. Third rotation shaft 82 is a solid and approximately cylindrical body. Third rotation shaft 82 is held by two third bearing portions 83 so as to be rotatable about a rotation axis extending axially. Two third bearing portions 83 are spaced apart from each other axially of third rotation shaft 82. Each of the two third bearing portions 83 is a ball bearing. Front gear 84 is connected to the tip end side of third rotation shaft 82. Front gear 84 is an external gear.

First air supply passage 11 supplies first air, which is compressed air for cooling head 3, to the inside of head 3. Dental handpiece 1 includes two first air supply passages 11. The first air is supplied from drive unit 5 connected with dental handpiece 1.

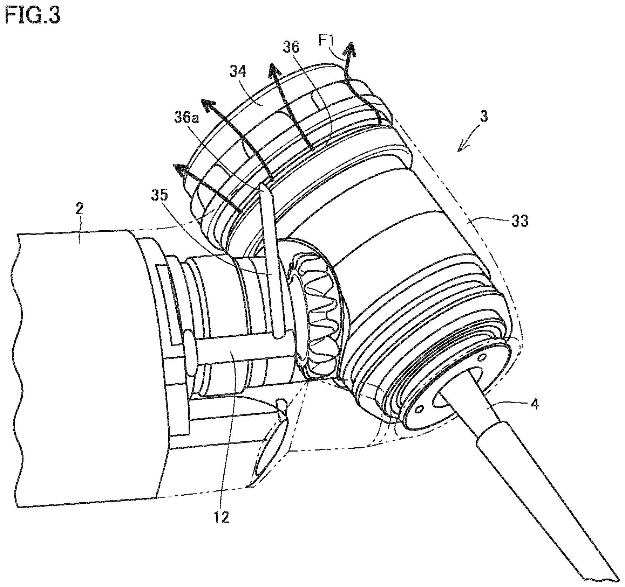

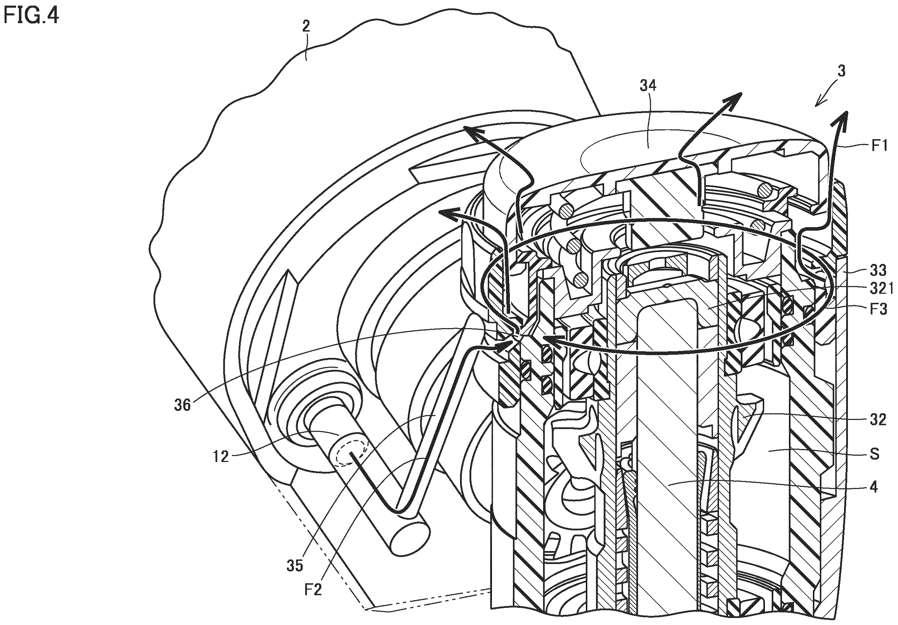

In addition, although not shown in Fig. 2, grip 2 includes a second air supply passage 12 as will be described in detail with reference to Figs. 3 and 4. Second air supply passage 12 supplies head 3 with second air lower in flow rate than the first air. However, in dental handpiece 1, which is a 45-degree contra angle handpiece, the second air is not mixed with water and blown onto the affected area as chip air to reduce the risk of causing emphysema. Therefore, dental handpiece 1 effectively uses the second air, which is not used as the chip air, to cool head 3.

Although not shown, grip 2 has a water supply passage. Dental handpiece 1 releases the cleaning water supplied from the water supply passage toward the affected area during treatment.

Head 3 includes a shaft portion 31, a tool rotation mechanism 32, a housing 33, and a cap 34.

Shaft portion 31 is connected to the tip end side of grip 2. Shaft portion 31 is connected such that third rotation shaft 82 of grip 2 and cutting tool 4 attached to head 3 are inclined at an angle of approximately 45°.

Tool rotation mechanism 32 is configured to rotate cutting tool 4 by transmitting the rotation of third transmission mechanism 80 to cutting tool 4. Tool rotation mechanism 32 includes a holder 321 and two head portion bearing portions 322.

Holder 321 is held by two head portion bearing portions 322 so as to be rotatable about a rotation axis extending axially of cutting tool 4. Two head portion bearing portions 322 are spaced apart from each other axially of holder 321. Each of the two head portion bearing portions 322 is a ball bearing. Holder 321 has a mechanism for detachably holding cutting tool 4.

Housing 33 is a hollow and approximately cylindrical body extending along the longitudinal direction of cutting tool 4 to be attached. Tool rotation mechanism 32, which rotatably drives cutting tool 4 held inside housing 33, is accommodated in housing 33. The top and bottom ends of housing 33 are open, and cap 34 is placed in the top end portion. Cap 34 is provided to attach and detach cutting tool 4 to and from head 3.

Next, the structure for cooling the inside of head 3 and the flow path of the second air in head 3 will be described. Figs. 3 and 4 are views for illustrating the structure inside of head 3 and the flow path of compressed air.

Part of the compressed air supplied from the air supply passage described above leaks from head 3. As described above, in consideration of the risk of causing emphysema, it is preferable that the air leaking from the cutting edge side of the cutting tool of head 3 be small. Of the compressed air for cooling head 3 described above, approximately half of the air leaking from head 3 leaks from the cutting edge side of cutting tool 4 of head 3. Thus, if the amount of air for cooling head 3 is increased by simply mixing the air that is not used as chip air with the compressed air for cooling head 3, the cooling performance will increase, but the amount of air leaking from the cutting edge side of the cutting tool of head 3 will increase, increasing the risk of causing emphysema.

Therefore, a cooling passage 35 is formed in the side wall of housing 33. Cooling passage 35 is connected to one end of second air supply passage 12. The second air supplied from second air supply passage 12 passes through cooling passage 35. Cooling passage 35 is a passage extending from cutting edge side 4a to opposite side 4b.

In addition, housing 33 has a cooling groove 36 that allows air to pass therethrough, which is formed in the side wall of housing 33. Cooling groove 36 has an opening 36a that is in communication with cooling passage 35. One end of cooling passage 35 which is not connected to one end of second air supply passage 12 is connected to cooling groove 36. This causes the second air supplied from second air supply passage 12 to pass through cooling passage 35 and flow into cooling groove 36.

Cap 34 covers the portion of housing 33 on opposite side 4b. Cap 34 forms a ventilation path that is in communication with cooling groove 36 between housing 33 and cap 34. In Fig. 3, an arrow F1 indicates a flow of the second air that flows into cooling groove 36 and is then exhausted through the ventilation path. The second air that has flowed into head 3 passes through cooling groove 36 and is exhausted to opposite side 4b of head 3. The flow of the second air will be described later.

As shown in Fig. 4, head 3 has a space S. Space S is connected to first air supply passage 11. Thus, the first air supplied from first air supply passage 11 flows into space S. The first air that has flowed into space S leaks from head 3. Specifically, the first air that has flowed into space S is discharged from cutting edge side 4a and opposite side 4b of head 3.

### [Flow of Compressed Air Flowing into Cooling Passage]

Next, a flow of the second air supplied from second air supply passage 12 in head 3 will be described with reference to Fig. 4.

In Fig. 4, as indicated by an arrow F2, the second air is supplied from one end of second air supply passage 12 toward cooling passage 35. The supplied second air passes through cooling passage 35 and flows into cooling groove 36.

In Fig. 4, as indicated by an arrow F3, the second air that has flowed into cooling groove 36 circulates through cooling groove 36. Further, as indicated by arrow F1, the second air is exhausted in the opposite side 4b direction through the vent that is in communication with cooling groove 36.

As cooling passage 35 is provided, air for cooling head 3 can be supplied while suppressing the amount of air leaking from cutting edge side 4a of head 3.

### [Flow Rate of Compressed Air]

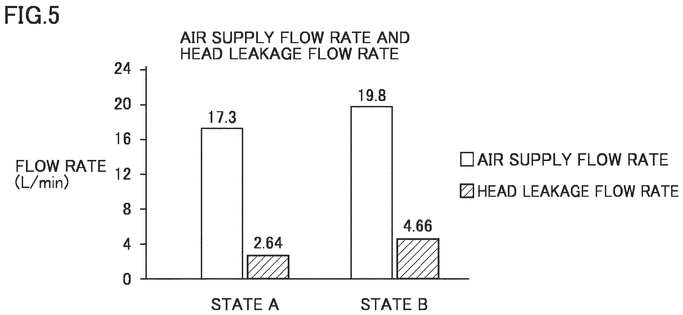

In dental handpiece 1, providing cooling passage 35 not only increases the cooling efficiency of head 3 but also suppresses the amount of air exhausted from cutting edge side 4a of head 3. In particular, in the case of dental handpiece 1 being a 45-degree contra angle handpiece, the amount of air exhausted from cutting edge side 4a of head 3 is preferably small, due to concerns about the risk of causing emphysema. The air leakage amount in dental handpiece 1 will be descried below with reference to Figs. 5 to 7. In the following description, cutting edge side 4a in Fig. 1 will be referred to as a front side (F side) of head 3, and opposite side 4b will be referred to as a rear side (R side) of head 3.

Fig. 5 shows the total amount of air supplied to dental handpiece 1 and the total amount of air exhausted from head 3. The state in which only the first air is supplied to dental handpiece 1 will be referred to as a state A, and the state in which both the first air and the second air are supplied to dental handpiece 1 will be referred to as a state B. In either state, the first air is supplied to dental handpiece 1 at 17.3 L/min. In state B, the second air is supplied to dental handpiece 1 at 2.5 L/min. Thus, the total air supply amount of the first air and the second air is 17.3 L/min in state A and is 19.8 L/min in state B.

The air exhausted from head 3 is measured on the above conditions. The amount of air exhausted from head 3 per unit time is 2.64 L/min in state A and is 4.66 L/min in state B. As the amount of air leaking from head 3 relative to the air supply amount is calculated, it is 15% in state A and is 24% in state B. In state B, where the second air is supplied, the amount of air leaking from head 3 increases.

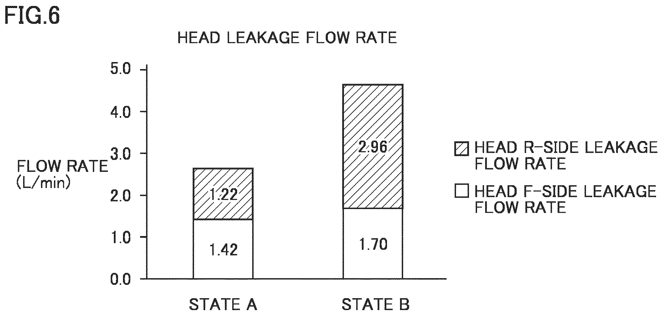

Next, the direction in which the air leaking from head 3 is discharged will be described. Fig. 6 shows the flow rates of air leaking from the F side and the R side of head 3. Of the flow rate of 2.64 L/min leaking from head 3 in state A, the flow rate of the air on the F side is 1.42 L/min, and the flow rate of the air on the R side is 1.22 L/min. Of the flow rate of 4.66 L/min leaking from head 3 in state B, the flow rate of the air on the F side is 1.70 L/min, and the flow rate of the air on the R side is 2.96 L/min. When the amount of increase in the flow rate of air in state B relative to state A is compared between the F side and the R side, the flow rate increases by 0.28 L/min on the F side, whereas the flow rate increases by 1.74 L/min on the R side. It is shown that most of the amount of the air leaking from head 3 which has increased in state B relative to state A leaks from the R side.

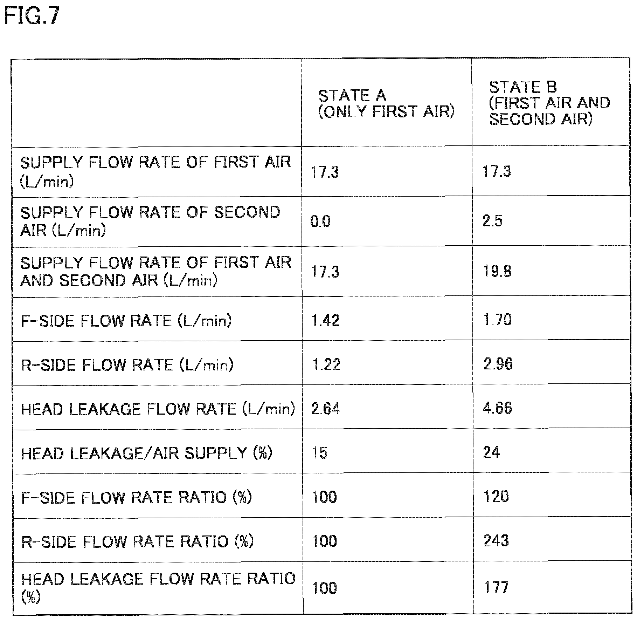

Fig. 7 is a diagram for illustrating the amount of air supplied to head 3 and the amount of air leaking from head 3. As shown in Fig. 7, when the flow rate on the F side in state A is 100%, the flow rate on the F side in state B is 120%. When the flow rate on the R side in state A is 100%, the flow rate on the R side in state B is 243%. When the total flow rate leaking from head 3 in state A is 100%, the total flow rate leaking from head 3 in state B is 177%. When state A is compared with state B, thus, the total flow rate of the air leaking from head 3 increases in state B, but most of this is exhausted from the R side, not from the F side. In other words, even if the second air is supplied to head 3 to increase the total amount of air supplied to head 3, the amount of the air leaking from the F side can be suppressed by providing cooling passage 35.

### [Temperature Change of Head]

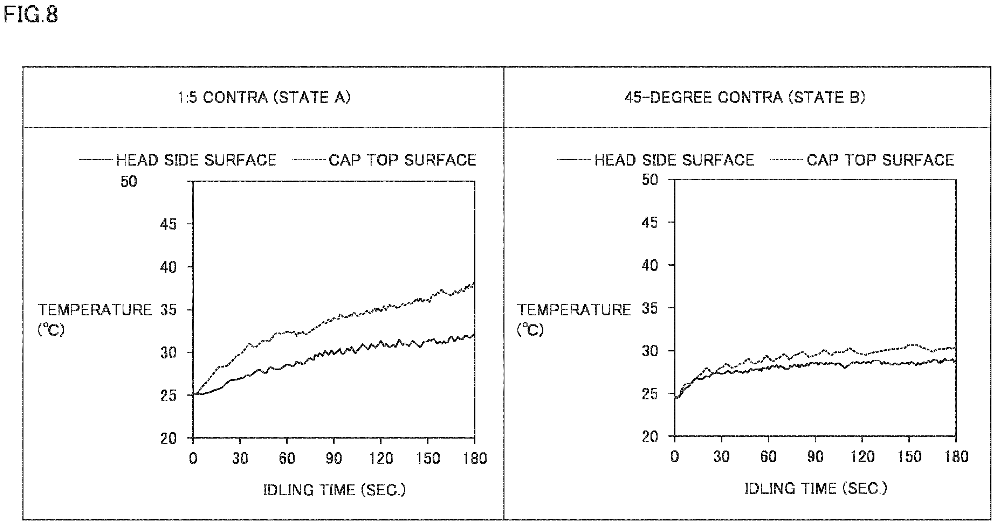

Next, temperature changes of the head will be described with reference to Fig. 8. Fig. 8 shows temperature changes of the head when two types of dental handpieces are used. The first dental handpiece is a 1:5 contra-handpiece, and this handpiece has no cooling passage for supplying the second air to the head. In other words, the head is cooled only by the first air, which corresponds to state A described above. In contrast, the second dental handpiece is a 45° contra handpiece, and this handpiece has passages for supplying the first air and the second air respectively to the head. In other words, the head of this handpiece is cooled by the first air and the second air, which corresponds to state B described above.

The left diagram of Fig. 8 shows temperature changes of the head side surface and the cap top surface when the 1:5 contra-handpiece is used, and the right diagram of Fig. 8 shows temperature changes of the head side surface and the cap top surface when the 45° contra-handpiece is used. In each diagram, the vertical axis indicates the temperature, and the horizontal axis indicates the time during which the motor runs idle. In each diagram, the black line indicates temperature changes of the head side surface, and the gray line indicates temperature changes of the cap top surface. The head side surface corresponds to the surface of housing 33 of head 3 in Fig. 3. The cap top surface corresponds to the surface of cap 34 on the R side in Fig. 3.

As shown in Fig. 8, in the 1:5 contra-handpiece, as the idling time elapses, the temperature of the cap top surface increases, and the temperature difference from the head side surface increases. In other words, when the head is cooled using only the first air, the temperature of the cap top surface may gradually increase in association with the use of the dental handpiece.

In contrast, as shown in Fig. 8, in the case of the 45-degree contra angle handpiece, the temperature of the cap top surface remains approximately constant even after a lapse of the idling time. In other words, when the head is cooled using the first air and the second air, a temperature rise of the cap top surface can be suppressed.

It can be seen from the above that providing cooling passage 35 in dental handpiece 1 can suppress a temperature rise of head 3. In particular, a temperature rise in the portion on opposite side 4b of head 3 can be suppressed. This portion may not be cooled sufficiently by the first air if the idling time becomes longer. This portion may come into contact with the inside of the patient's mouth cavity, and thus, this portion can be cooled particularly by providing cooling passage 35.

Dental handpiece 1 can suppress a rise in the surface temperature of head 3 which accompanies the use of the dental handpiece by using not only the first air but also the second air for cooling head 3. In particular, a temperature rise on the side of the cutting tool of head 3 opposite to the cutting edge side can be suppressed.

In addition, even if the second air is provided for cooling in dental handpiece 1, most of the second air provided is exhausted from the R side of head 3. For example, in an operative procedure on impacted wisdom teeth, the vicinity of the separation area of the gum may be cut, leading to higher risk of causing emphysema than in other treatments. Emphysema is caused by air being blowen onto the separation area of the gum. Therefore, in the above-mentioned operative procedure, the amount of the air blown out from the F side of head 3 is preferably small. Dental handpiece 1, which suppresses the amount of air leaking from the F side while enhancing the cooling performance, can also be used for operative procedures at high risk of causing emphysema as described above.

Dental handpiece 1 is not limited to the configuration described above. For example, dental handpiece 1 has been described using a motor handpiece as an example, but the present disclosure is not limited thereto. Dental handpiece 1 can be any air turbine handpiece that is a dental handpiece including a holder that holds and rotates a cutting tool and a bearing portion that rotatably supports the holder. When dental handpiece 1 is the air turbine handpiece, the maximum rotation speed of cutting tool 4 is 450,000 rpm.

In addition, dental handpiece 1 includes first air supply passage 11 and second air supply passage 12 as air supply passage, but the number of air supply passages is not limited to two. For example, in a handpiece that mixes the second air supplied from the second air supply passage with water and sprays it onto the affected area, a third air supply passage may be provided separately from the first air supply passage and the second air supply passage, and the third air supply passage may be connected to the cooling passage described above.

In the above description, providing the cooling passage allows second air supply passage 12, which has not been planned to be used, to be effectively used for cooling head 3. In this sense, second air supply passage 12 is considered as a redundant air supply passage that is not planned to be used for any other purpose than the use described above.

The internal configuration of grip 2 for driving cutting tool 4 is not limited to the configuration described above and can be any configuration, as long as it is capable of increasing the speed of rotation from drive unit 5 and transmitting it to head 3.

In dental handpiece 1 angle α formed between coupling portion 2a of grip 2 and head 3 is an obtuse angle, but angle α is not limited to the obtuse angle and may be a right angle. In addition, grip 2 of dental handpiece 1 is bent in the direction of extension as shown in Fig. 1, but the present disclosure is not limited thereto, and the grip may have a straight shape that is not bent in the direction of extension. In this case, the coupling portion is the entire grip, and the angle formed between the rotation axis of the cutting tool of the grip and the major axis of the coupling portion of the grip which is coupled to the head corresponds to the angle formed between the rotation axis of the cutting tool and the major axis of the grip. In other words, the grip is joined to the head such that the angle formed between the rotation axis of the cutting tool and the major axis of the grip is an obtuse angle.

Head 3 includes cap 34 covering housing 33 on the R side in the above description, but head 3 may include no cap. In such a case, for example, the second air supplied from cooling passage 35 is exhausted from the vent formed in head 3 on the R side.

The cooling medium introduced into dental handpiece 1 is a cooling gas such as compressed air in the above description by way of example, but the present disclosure is not limited thereto. The cooling medium may be a gaseous cooling medium such as cooled nonflammable gas, or a liquid cooling medium such as distilled water.

The cooling passage 35 has been described to have a structure extending from cutting edge side 4a to opposite side 4b of cutting tool 4, but the present disclosure is not limited thereto. The direction of extension of cooling passage 35 is not limited as long as the second air is supplied to head 3.

In addition, the housing 33 has been described to have cooling groove 36 that allows air to pass therethrough in the side wall of housing 33, but housing 33 may have no cooling groove 36.

It should be understood that the present disclosure is illustrative and non-restrictive in every respect. The present disclosure is defined by the claimed subject-matter, rather than the description above, and is intended to include any modifications within the claimed subject-matter.

## Claims

1. A dental handpiece for cutting and treating a tooth, the dental handpiece comprising:
a head including
a holder configured to hold a cutting tool configured to cut the tooth,
a tool rotation mechanism configured to rotate the cutting tool,
a housing configured to accommodate the holder and the tool rotation mechanism,
and
a cooling passage formed in a side wall of the housing; and
a grip including
a first air supply passage configured to supply first air for cooling the tool rotation mechanism, and
a second air supply passage connected to the cooling passage and configured to supply the head with second air lower in flow rate than the first air,
wherein the head is joined to the grip such that, of an angle formed between a rotation axis of the cutting tool and a major axis of a coupling portion of the grip, an angle on a cutting edge side of the cutting tool is an obtuse angle, the coupling portion being coupled to the head.

2. The dental handpiece according to claim 1, wherein
the cooling passage extends from the cutting edge side of the cutting tool to a side opposite to the cutting edge side of the cutting tool.

3. The dental handpiece according to claim 1 or 2, wherein
the housing has a cooling groove in the side wall, the cooling groove allowing air to pass therethrough, and
the cooling groove has an opening in communication with the cooling passage.

4. The dental handpiece according to claim 3, wherein
the head further includes a cap configured to cover a portion of the housing opposite to a side on which the cutting tool is held, a ventilation path in communication with the cooling groove being formed between the side wall and the cap.

5. The dental handpiece according to any one of claims 1 to 4, wherein
of a flow rate of the second air, a flow rate flowing to the cutting edge side of the cutting tool is lower than a flow rate flowing to the side opposite to the cutting edge side of the cutting tool.

6. The dental handpiece according to any one of claims 1 to 5, wherein the obtuse angle is from 130° to 140°.

7. The dental handpiece according to any one of claims 1 to 6, wherein a rotation speed of the cutting tool is 5 to 450,000 rpm.

8. The dental handpiece according to any one of claims 1 to 7, wherein
the grip includes a drive mechanism connected to an electric motor, and
the drive mechanism is configured to transmit rotative power of the electric motor to the tool rotation mechanism to rotate the cutting tool.

9. The dental handpiece according to claim 8, wherein
a rotation speed of the electric motor is 100 to 40,000 rpm, and
a rotation speed of the cutting tool is 5 to 300,000 rpm.

10. The dental handpiece according to any one of claims 1 to 9, wherein the dental handpiece is a 45-degree handpiece.

11. The dental handpiece according to any one of claims 1 to 10, wherein the dental handpiece is a 45-degree contra-angle handpiece.
